# EUROPÄISCHE PATENTSCHRIFT

(11) **EP 1 099 940 B1**
(45) Veröffentlichungstag und Bekanntmachung des Hinweises auf die Patenterteilung: **16.08.2006**
(21) Anmeldenummer: 00121921.1
(22) Anmeldetag: 07.10.2000
(51) Int. Cl.: G01F 1/72, F02D 41/18, G01M 15/00

(54) **Zylinder-Gleichverteilungs-Prüfung für Brennkraftmaschinen**
Testing of cylinder equal charge distribution for internal combustion engine
Vérification de distribution de charge équilibrée pour cylindres de moteur à combustion interne

(30) Priorität: 12.11.1999 DE 19954415
(43) Veröffentlichungstag der Anmeldung: 16.05.2001
(73) Patentinhaber: Bayerische Motoren Werke Aktiengesellschaft, 80809 München (DE)
(72) Erfinder: Thalmeier, Christian, 81927 München (DE); Brandl, Rudolf, 80935 München (DE); Piltz, Marcus, 80933 München (DE); Brüner, Thomas, 82194 Gröbenzell (DE)

(56) Entgegenhaltungen:
- EP-A- 0 833 043
- WO-A-92/03645
- DE-A- 19 653 521
- US-A- 5 107 816
- PATENT ABSTRACTS OF JAPAN vol. 1998, no. 06, 30. April 1998 (1998-04-30) & JP 10 037727 A (FUJI HEAVY IND LTD), 10. Februar 1998 (1998-02-10)
- PATENT ABSTRACTS OF JAPAN vol. 012, no. 227 (M-713), 28. Juni 1988 (1988-06-28) & JP 63 021338 A (NISSAN MOTOR CO LTD), 28. Januar 1988 (1988-01-28)

## Beschreibung

Die Erfindung betrifft eine Vorrichtung zur Bestimmung des Verbrennungsluftdurchsatzes einer mehrzylindrigen, ventilgesteuerten Hubkolben-Brennkraftmaschine gemäß dem Oberbegriff des Patentanspruchs 1.

Zum technischen Umfeld wird beispielsweise auf die DE 37 42 322 A1 hingewiesen. Diese beschreibt ein Ansaugsystem mit integrierter Luftmengenmessung für alle Zylinder einer Hubkolben-Brennkraftmaschine gemeinsam. Aufgrund der periodischen Ansaugvorgänge treten im Ansaugsystem Luftschwingungen auf, die den Luftmengenstrom über die Zeit bzw. den Kurbelwinkel verändern. Diese über die Kurbelwinkel variable Luftmenge kann zu Fehlmessungen bei der Verwendung von Luftmengenmessgeräten führen. Je geringer die Zylinderzahl der Brennkraftmaschine ist, umso stärker ausgeprägt ist die Luftpulsation. Im Extremfall führt sie zu Rückströmung im Saugrohr und zu einer Doppelmessung der angesaugten Luftmenge. Besonders kritisch ist der Sachverhalt bei der Messung der angesaugten Luftmenge von nur einem Zylinder einer Brennkraftmaschine. Deshalb schlägt die DE 37 42 322 A1 vor, einen Beruhigungsbehälter, in Strömungsrichtung hinter dem Luftmengenmessgerät plaziert, zur Dämpfung der periodischen Luftschwingungen einzusetzen.

Bei starker Drosselung der Ansaugluftmenge für Teillastbetrieb der Brennkraftmaschine, können aufgrund mechanischer Toleranzen in der Drosselmechanik unterschiedliche Luftmengen in die einzelnen Zylinder gelangen. Das führt zu unterschiedlichen Lambda-Werten in den einzelnen Zylindern und somit zu unruhigem Motorlauf und verschlechtertem Emissionsverhalten.

Aus der JP-A-10 037 727, von der diese Erfindung ausgeht ist ein Verfahren Beschrieben, zur zylinderselektiven Messung der Ansaugluftmenge beschrieben. Hierfür ist jedem Saugrohr ein eigener Luftmengenmesser zugeordnet, um zylinderselektiv den Lambda-Wert einstellen zu können.

Aufgabe ist es, eine Vorrichtung für eine mehrzylindrige, ventilgesteuerte Brennkraftmaschine aufzuzeigen, mit der es möglich ist, die von jedem einzelnen Zylinder angesaugte Luftmasse zu messen.

Diese Aufgabe wird erfindungsgemäß durch die Merkmale im kennzeichnenden Teil des Patentanspruchs 1 gelöst.
Durch die Einbringung von einem Beruhigungsvolumen in jede Messstrecke, werden die Pulsationen für jede Messstrecke separat gedämpft. Querbeeinflussung der Messstrecken untereinander wird vermieden. Schaltventile, die vor und hinter den Luftmassenmessgeräten in die Messstrecken integriert werden können, erlauben eine serielle Anordnung aller Luftmassenmessgeräte. Dies gestattet die Kalibrierung aller Luftmassenmessgeräte unter den selben Bedingungen. Vorteilhaft darüber hinaus ist, dass nicht die absoluten Messwerte sondern die relative Lage der Messwerte der einzelnen Luftmassenmesser zueinander, wichtig sind.

Eine Dimensionierung des Beruhigungsvolumen nach Anspruch 2, führt beispielsweise zu einer fast idealen Dämpfung der Luftpulsationen. Dadurch sind sehr kurze Mess-, bzw. Integrationszeiten bei der Zylinderkopfprüfung möglich. Unterstützt wird die kurze Prüfzeit durch einen kompakten Aufbau der Vorrichtung. Diese wird bei der Prüfung des Zylinderkopfs anstelle der Seriensauganlage an diesem angeflanscht.

Des weiteren erhält man bei Verwendung von Luftmassenmessern gemäß Anspruch 3 anstelle von Luftmengenmessern direkt die für die zylinderselektive Einspritzung benötigte Luftmasse. Luftmassenmesser verrechnen die gemessene Luftmenge mit dem an der Luftmengenmessstelle vorherrschenden Luftdruck und Lufttemperatur zur Luftmasse. Messfehler aufgrund von Temperaturunterschieden in der Prüfvorrichtung während der Messung werden vermieden.

Die Verwendung einer Druckluftversorgungsanlage entsprechend Anspruch 4 ermöglicht die Bereitstellung von Verbrennungsluft für die Messungen sowohl an einer komplett aufgebauten Brennkraftmaschine als auch an einem einzeln aufgebauten Zylinderkopf, bei dem nur der Ventiltrieb angetrieben wird. Der Verbrennungsluftmassenstrom wird im zweiten Fall durch Überdruck in der Druckluftversorgungsanlage erzeugt, da ohne Saugvorgang durch Kolben und Ventiltrieb keine Luft von dem Zylinderkopf angesaugt wird. Die Verwendung einer Druckluftversorgungsanlage ist für Messungen an einer komplett aufgebauten Brennkraftmaschine nicht zwingend erforderlich. Für diesen Fall ist der Druckausgleichsbehälter gegenüber der Umgebungsluft offen, wodurch die Brennkraftmaschine die Verbrennungsluft aus der Umgebungsluft frei absaugt. Die Verwendung einer Druckluftversorgungsanlage kann zur Erzielung einer größeren Messgenauigkeit eingesetzt werden. Zur Vermeidung von unterschiedlichen Verbrennungsluftmassenströmen durch Druckabfall aufgrund unterschiedlicher Leitungslängen zu den Messstrecken, kann zwischen der Druckluftversorgungsanlage und den Messstrecken ein Druckausgleichsbehälter integriert sein. Für den Fall der Vermessung einer komplett aufgebauten Brennkraftmaschine wird die Druckluftversorgungseinrichtung nicht benötigt. Die Verbrennungskraftmaschine saugt durch den von den Kolben erzeugten Unterdruck Verbrennungsluft aus der Umgebungsluft an.

Im folgenden wird die Erfindung anhand bevorzugter Ausführungsbeispiele näher erläutert. Es stellen dar:
- Fig. 1:: ein Ausführungsbeispiel für den Prüfbetrieb eines Zylinderkopfes 1 und
- Fig. 2:: ein Ausführungsbeispiel für die Kalibrierung der Luftmassenmessgeräte 9 und 15-17.

In der Zeichnung ist der Zylinderkopf 1 einer Brennkraftmaschine von oben angedeutet, hier beispielsweise mit vier Zylindern 2-5 ausgeführt.

Zu dem Zylinder 2 ist eine Messstrecke 6, und zu den Zylindern 3-5 ist eine Messstrecke 7 am Zylinderkopf 1 zugeordnet. Die dem Zylinder 2 zugeordnete Messstrecke 6 besteht aus einem Saugrohr 8, in dem in Strömungsrichtung zuerst ein Luftmassenmessgerät 9, ein Schaltventil 10 und ein Beruhigungsvolumen 11 integriert sind. Die Messstrecken 7, die den Zylindern 3-5 zugeordnet sind, sind ähnlich aufgebaut wie die Messstrecke 6. Sie bestehen ebenfalls aus je einem Saugrohr 12-14, in dem jeweils in Strömungsrichtung zuerst je ein Luftmassenmessgerät 15-17, je ein Schaltventil 18-20, und je ein Beruhigungsvolumen 21-23 integriert sind. Die Saugrohre 12-14 beinhalten jedoch in Strömungsrichtung vor dem Luftmassenmessgerät 15-17 je ein weiteres Schaltventil 24-26.

Eine Rohrleitung 27 verbindet jeweils die Schaltventile 10 und 24, die Schaltventile 18 und 25, die Schaltventile 19 und 26 und das Schaltventil 20 mit einem Drosselorgan 28.

Jede Messstrecke 6, 7 ist in Strömungsrichtung zuerst an einen gemeinsamen Druckausgleichsbehälter 29 und abschließend an den Zylinderkopf 1 angeordnet. An dem gemeinsamen Druckausgleichsbehälter 29 ist ausserdem eine Druckluftversorgungsanlage mit Drosselorgan 30 angeschlossen, hier durch einen Pfeil, der gleichzeitig die Strömungsrichtung anzeigt, dargestellt.

In Strömungsrichtung nach der Druckluftversorgungsanlage mit Drosselorgan 30 und nach dem Drosselorgan 28 ist jeweils ein Absperrventil 32; 33 angeordnet.

Zur Messung der Verbrennungsluftmasse für jeden Zylinder wird der Druckausgleichbehälter 29 mit Druckluft aus der Druckluftversorgungsanlage 30 beaufschlagt. Die Verbrennungsluft liegt aufgrund des Druckausgleichbehälters 29 mit identischem Vordruck an den zylinderzugeordneten Messstrecken 6, 7 für die Zylinder 2-5 an. Die Schaltventile 10, 18-20 und 24-26 sind während der gesamten Prüfung so geschalten, dass die Verbrennungsluft von dem Druckausgleichsbehälter 29 kommend nur durch die Messstrecken 6, 7 in Richtung der Zylinder 2-5 strömen kann.

Bei drehender Kurbelwelle (hier nicht dargestellt) wird durch die Kolbenbewegung und Ventilsteuerung Verbrennungsluft durch die Messstrecken 6, 7 angesaugt.

Die auftretende Luftpulsation in den Messstrecken 6, 7 wird durch die Beruhigungsvolumina 11, 21-23 gedämpft (tiefpassgefilert) und die je Zylinder 2-5 angesaugte Verbrennungsluftmasse von den Luftmassenmessgeräten 9, 15-17 gemessen.

Im Fall der Prüfung des Zylinderkopfes 1 alleine, ohne angebautes Kurbelgehäuse, wird die Einlassnockenwelle (hier nicht dargestellt) von einer separaten, hier nicht dargestellten Antriebseinheit angetrieben. Die Verbrennungsluft, von der Druckluftversorgungsanlage mit Drosselorgan 30 kommend, wird aufgrund des Überdrucks, durch den Druckausgleichsbehälter 29 und die Messstrecken 6 und 7, in die Zylinder 2-5 geblasen. Die Messung der Verbrennungsluftmasse je Zylinder erfolgt auch für diesen Fall, wie oben bereits beschrieben, tiefpassgefiltert.

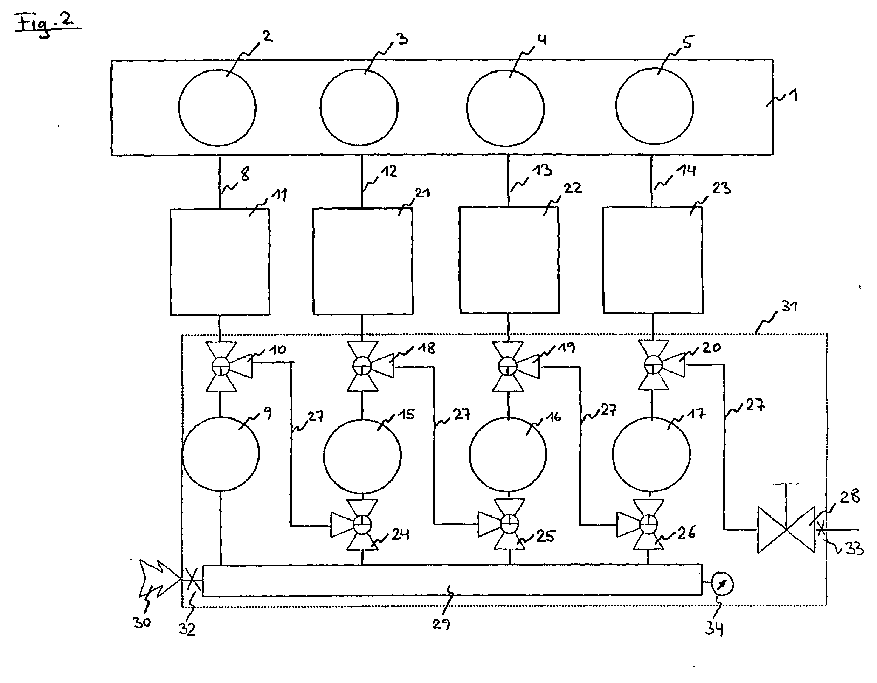

In Fig. 2 ist ein Ausführungsbeispiel zur Kalibrierung der Luftmassenmessgeräte dargestellt. Die Bezugsziffern von der Figurenbeschreibung 1 gelten auch für die Fig. 2.

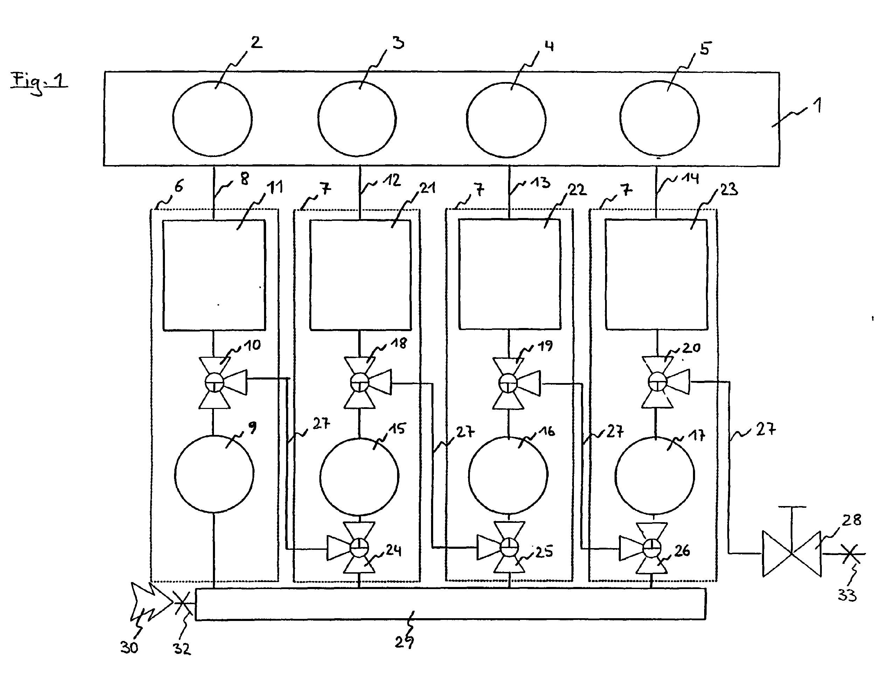

Gegenüber dem in Fig. 1 dargestellten Grundaufbau sind die Schaltventile 10, 18-20 und 24-26 derart geschalten, dass die Luft, kommend aus der Druckluftversorgungsanlage mit Drosselorgan 30 zuerst ein Absperrventil 32, dann die in Reihe geschalteten Luftmassenmessgeräte durchströmt; zuerst Luftmassenmessgerät 9, dann Luftmassenmessgerät 15, dann Luftmassenmessgerät 16 und das Luftmassenmessgerät 17. Zuletzt gelangt die Luft durch die Rohrleitung 27 in ein Drosselorgan 28 und ein Absperrventil 33. Hieraus resultiert eine neue Luftführung für eine Messstrecke 31.

Die Messstrecke 31 besteht aus der Druckluftversorgungsanlage mit Drosselorgan 30, dem Absperrventil 32, dem Druckausgleichsbehälter 29, der Rohrleitung 27 mit den in die Rohrleitung integrierten Luftmassenmessgeräten 9, 15-17, dem Absperrventil 33 und dem Drosselorgan 28.

Zur Kalibrierung der Luftmassenmessgeräte in der Messstrecke 31 speist die Druckluftversorgungsanlage mit Drosselorgan 30 Luft in diese. Absperrventil 33 ist geschlossen, damit wird in der Messstrecke 31 der selbe Druck wie in der Druckluftversorgungsanlage mit Drosselorgan 30 aufgebaut. Der in der Messstrecke 31 herrschende Luftdruck wird mit einer Druckmessstelle 34 überwacht. Nach Erreichung des Enddrucks, wird das Absperrventil 32 geschlossen. Ist mit der Druckmessstelle 34 kein Druckabfall in der Messstrecke 31 messbar, ist diese bereit zur Kalibrierung. Absperrventile 32 und 33 werden geöffnet und die Druckluftversorgungsanlage mit Drosselorgan 30 speist Luft in Messstrecke 31. Der Druckausgleichsbehälter 29 dämpft eventuell von der Druckluftversorgungsanlage mit Drosselorgan 30 kommende Druckluftschwankungen. Anschließend durchströmt die Kalibrierluftmasse die Rohrleitung 27, somit auch die zu kalibrierenden Luftmassenmessgeräte 9, 15-17 und in Strömungsrichtung zuletzt das Drosselorgan 28. Mit diesem Drosselorgan 28 werden beliebige Luftmassenströme für die Kalibrierung der Luftmassenmessgeräte eingestellt.

### Bezugszeichenliste:

- 1: Zylinderkopf
- 2-5: Zylinder
- 6; 7; 31: Messstrecke
- 8; 12-14: Saugrohr
- 9; 15-17: Luftmassenmessgerät
- 10; 18-20; 24-26: Schaltventil
- 11; 21-23: Beruhigungsvolumen
- 27: Rohrleitung
- 28: Drosselorgan
- 29: Druckausgleichsbehälter
- 30: Druckluftversorgungsanlage mit Drosselorgan
- 32; 33: Absperrventil
- 34: Druckmessstelle

## Patentansprüche

1. Vorrichtung zur Bestimmung des Verbrennungsluftdurchsatzes durch einen Zylinderkopf (1) einer mehrzylindrigen, ventilgesteuerten Hubkolben-Brennkraftmaschine mit Hilfe eines Messsystems, dem ein Beruhigungsvolumen (11, 21-23) zugeordnet ist und wobei jeder Zylinder (2-5) ein Saugrohr (8, 12-14) aufweist, wobei in jedem Saugrohr (8, 12-14) der Hubkolben-Brennkraftmaschine ein separates Messgerät (9, 15-17) angeordnet ist,
**dadurch gekennzeichnet, dass** in jedes Saugrohr (8, 12-14) ein separates Beruhigungsvolumen (11, 21-23) und in Strömungsrichtung nach jedem Luftmassenmessgerät (9, 15-17) ein Schaltventil (10, 18-20) und vor den Luftmassenmessgeräten (15-17) für die Zylinder (3-5) ein weiteres Schaltventil (24-26) integriert ist.

2. Vorrichtung nach Anspruch 1,
**dadurch gekennzeichnet, dass** das Beruhigungsvolumen (11, 21-23) mindestens das 20fache und maximal das 200fache des Hubvolumens des zugehörigen Zylinders (2-5) der Brennkraftmaschine hat.

3. Vorrichtung nach Anspruch 1 oder 2,
**dadurch gekennzeichnet, dass** als Messgerät (9, 15-17) ein Luftmassenmessgerät vorgesehen ist.

4. Vorrichtung nach einem der Ansprüche 1 bis 3,
**dadurch gekennzeichnet, dass** eine Druckluftversorgungsanlage mit Drosselorgan (30) mit einem Druckausgleichsbehälter (29) vorgesehen ist, an dem jedes einzelne Saugrohr (8, 12-14) angeschlossen ist.

5. Vorrichtung nach einem der Ansprüche 1 bis 4,
**dadurch gekennzeichnet, dass** die Schaltventile (10, 18-20, 24-26) so miteinander verschaltbar sind, dass alle Luftmassenmessgeräte (9, 15-17) in einer Rohrleitung (27) in Reihe schaltbar sind.

6. Vorrichtung nach Anspruch 4 oder 5,
**dadurch gekennzeichnet, dass** die zur Kalibrierung der Luftmassenmesser nötige Luftmasse aus der Druckluftversorgungsanlage mit Drosselorgan (30) stammt.

7. Vorrichtung nach einem der Ansprüche 4 bis 6,
**dadurch gekennzeichnet, dass** die zur Kalibrierung nötige Luftmasse entweder durch das in die Druckluftversorgungsanlage (30) integrierte oder durch ein Drosselorgan (28), in Strömungsrichtung nach dem letzten der in Reihe geschalteten Luftmassenmessgeräte (9, 15-17) in der Rohrleitung (27) integriert, einstellbar ist.

8. Vorrichtung nach einem der Ansprüche 4 bis 7,
**dadurch gekennzeichnet, dass** ein Absperrhahn (32) vor dem Druckausgleichsbehälter (29) und ein Absperrhahn (33) hinter dem Drosselorgan (28) angeordnet ist.

## Claims

1. A device for determining the combustion-air flow rate through a cylinder head (1) of a multi-cylinder valve-controlled reciprocating piston engine, using a measuring system associated with a damping chamber (11, 21 - 23) and wherein each cylinder (2 - 5) has a suction pipe (8, 12 - 14), wherein a separate measuring device (9, 15 - 17) is disposed in each suction pipe (8, 12 - 14) of the reciprocating piston engine,
**characterised in that** a separate damping chamber (11, 21 - 23), an on-off valve (10, 18 - 20) in the direction of flow behind each air flow sensor (9, 15 - 17) and an additional on-off valve (24 - 26) in front of the air flow sensors (15 - 17) for the cylinders (3 - 5) are incorporated in each suction pipe (8, 12 - 14).

2. A device according to claim 1,
**characterised in that** the damping chamber (11, 21 - 23) has at least twenty times and at most two hundred times the piston capacity of the associated cylinder (2 - 5) of the engine.

3. A device according to claim 1 or claim 2,
**characterised in that** the measuring device (9, 15 - 17) is an air mass flow sensor.

4. A device according to any of claims 1 to 3,
**characterised in that** a compressed-air supply installation comprising a throttle means (30) and a pressure equalising reservoir (29) is provided and connected to each individual suction pipe (8, 12 - 14).

5. A device according to any of claims 1 to 4,
**characterised in that** the on-off valves (10, 18 - 20, 24 - 26) can be so connected to one another that the air mass flow sensors (9, 15 - 17) are switchable in line in a pipeline (27).

6. A device according to claim 4 or claim 5,
**characterised in that** the air needed for calibrating the air mass flow sensor comes from the compressed air supply installation and throttle means (30).

7. A device according to any of claims 4 to 6,
**characterised in that** the air needed for calibration is adjustable either by the ...* incorporated in the compressed-air supply installation (30) or by a throttle means (28) incorporated in the pipeline (27) in the direction of flow behind the last of the air mass flow sensors (9, 15 - 17) connected in series.

8. A device according to any of claims 4 to 7,
**characterised in that** a stopcock (32) is disposed before the pressure equalising reservoir (29) and a stopcock (33) is disposed behind the throttle means (28).

## Revendications

1. Dispositif pour déterminer le débit d'air de combustion dans une culasse (1) d'un moteur à combustion interne à piston alternatif à plusieurs cylindres commandé par soupape, à l'aide d'un système de mesure auquel est associé un volume de stabilisation (11, 21-23) et avec pour chaque cylindre (2-5) un tube d'aspiration (8, 12-14) et un appareil de mesure (9, 15-17) séparé associé à chaque tube d'aspiration (8, 12-14) du moteur à combustion,
**caractérisé en ce qu'**
un volume de stabilisation (11, 21-23) séparé et, dans la direction d'écoulement, en aval de chaque appareil de mesure de masse d'air (9, 15-17) une soupape de commutation (10, 18-20), et en amont des appareil de mesures de masse d'air (15-17) pour les cylindres (3-5), une autre soupape de commutation (24-26) sont intégrés dans chaque tube d'aspiration (8, 12-14).

2. Dispositif selon la revendication 1,
**caractérisé en ce que**
le volume de stabilisation (11, 21-23) présente au minimum 20 fois et au maximum 200 fois le volume unitaire du cylindre (2-5) associé du moteur à combustion interne.

3. Dispositif selon la revendication 1 ou 2,
**caractérisé en ce que**
l'appareil de mesure (9, 15-17) est un appareil de mesure de masse d'air.

4. Dispositif selon l'une quelconque des revendications 1 à 3,
**caractérisé en ce qu'**
un dispositif d'alimentation en air comprimé avec organe d'étranglement (30) présente un récipient de compensation de pression (29), auquel est raccordé chaque tube d'aspiration (8, 12-14).

5. Dispositif selon l'une quelconque des revendications 1 à 4,
**caractérisé en ce que**
les soupapes de commutation (10, 18-20, 24-26) peuvent être reliées les unes aux autres pour pouvoir commuter en série tous les appareils de mesure de masse d'air (9, 15-17) d'une conduite (27).

6. Dispositif selon la revendication 4 ou 5,
**caractérisé en ce que**
la masse d'air nécessaire pour le calibrage des appareils de mesure de masse d'air provient d'un dispositif d'alimentation en air comprimé avec organe d'étranglement (30).

7. Dispositif selon l'une quelconque des revendications 4 à 6,
**caractérisé en ce que**
la masse d'air nécessaire pour le calibrage peut être réglée soit par l'organe d'étranglement intégré dans le dispositif d'alimentation en air comprimé (30), soit par un organe d'étranglement (28) intégré dans la conduite (27) dans la direction d'écoulement en aval du dernier des appareils de mesure de masse d'air (9, 15-17) commutés en série.

8. Dispositif selon l'une quelconque des revendications 4 à 7,
**caractérisé en ce qu'**
une soupape d'arrêt (32) est disposée en amont du récipient de compensation de pression (29) et une soupape d'arrêt (33) en aval de l'organe d'étranglement (28).
